# FASCICULE DE BREVET EUROPEEN

(11) **EP 1 907 970 B1**
(45) Date de publication et mention de la délivrance du brevet: **05.03.2014**
(21) Numéro de dépôt: 06793036.2
(22) Date de dépôt: 28.08.2006
(51) Int. Cl.: G06F 21/46, G06Q 20/40, G06Q 20/38

(54) **MÉTHODE POUR GÉNÉRER UNE PLURALITÉ DE NUMÉROS SÉCURISÉS UNIQUES ET CARTE COMPORTANT UN TEL NUMÉRO**
METHODE ZUM GENERIEREN VON EINZIGARTIGEN, GESICHERTEN NUMMERN UND KARTE MIT EINER SOCHEN NUMMER
METHOD FOR GENERATING A PLURALITY OF UNIQUE SECURE NUMBERS AND CARD COMPRISING SUCH A NUMBER

(30) Priorité: 31.08.2005 EP 05107984
(43) Date de publication de la demande: 09.04.2008
(73) Titulaire: Nagravision S.A., 1033 Cheseaux-sur-Lausanne (CH)
(72) Inventeur: SASSELLI, Marco, CH-1803 Chardonne (CH)
(74) Mandataire: Leman Consulting S.A.
(86) Numéro de dépôt international: PCT/EP2006/065748
(87) Numéro de publication internationale: WO 2007/025954

(56) Documents cités:
- WO-A-00/49586
- GB-A- 2 369 800
- GB-A- 2 396 946

## Description

### DOMAINE TECHNIQUE

La présente invention concerne une méthode pour générer une pluralité de numéros sécurisés uniques, ces numéros étant par exemple imprimés sur un support physique et permettant, après vérification de leur authenticité, d'accéder à des droits ou d'obtenir un crédit notamment. L'invention concerne également un support physique recevant un tel numéro.

### TECHNIQUE ANTÉRIEURE

Il existe actuellement de nombreuses manières d'obtenir un crédit ou un droit pour une application particulière. Parmi celles-ci, on peut citer les "cartes à gratter" comportant un numéro imprimé, caché par une encre opaque. Lorsque l'utilisateur achète la carte, il retire l'encre opaque de façon à faire apparaître le numéro imprimé. Il envoie ensuite ce numéro, par exemple sous forme de SMS (Short Message Service) au moyen d'un téléphone portable à un centre de gestion. Celui-ci vérifie la validité du numéro reçu. En cas de validité, le droit associé à ce numéro ou le crédit est attribué.

Il est clair que l'attribution des droits ou du crédit ne devrait être faite que si le numéro envoyé est valide, ce qui signifie qu'il ne faut pas qu'en envoyant un numéro au hasard, on puisse obtenir le crédit ou le droit souhaité.

Pour ceci, les numéros sécurisés actuels sont composés d'une part d'un numéro d'identification et d'autre part d'une valeur de contrôle. Le numéro d'identification peut être un nombre aléatoire et représenter la première partie du numéro sécurisé.

La valeur de contrôle est un nombre qui dépend du numéro d'identification. Plus précisément, cette valeur de contrôle peut être calculée à partir du numéro d'identification, d'un secret tel qu'une clé et d'une règle de calcul. Cette valeur de contrôle représente la deuxième partie du numéro d'identification.

Lorsqu'un utilisateur envoie un numéro complet au centre de gestion, le numéro d'identification est extrait du numéro complet reçu. La valeur de contrôle est calculée à partir de ce numéro d'identification. Cette valeur de contrôle calculée est comparée à la valeur de contrôle reçue. Le droit ou le crédit est accordé uniquement si ces deux valeurs de contrôle correspondent.

La longueur totale du numéro sécurisé est généralement fixée par le fournisseur de services. Cette longueur est identique pour tous les numéros sécurisés d'un opérateur donné. Elle ne doit pas être trop grande pour éviter que l'utilisateur ne doive envoyer une suite de chiffres trop importante. Elle ne doit pas non plus être trop petite d'une part pour ne pas limiter trop fortement le nombre de numéros possibles et d'autre part pour garantir un niveau de sécurité suffisant.

Dans les numéros sécurisés actuels, on sépare la longueur du numéro sécurisé en deux "champs" de longueur fixe. L'un des champs, par exemple celui comprenant les chiffres de poids forts représente le numéro d'identification (IN) et l'autre champ, contenant les chiffres de poids faibles, représente la valeur de contrôle (VC).

Il est clair que plus le nombre de chiffres du numéro d'identification (IN) est petit, plus le nombre de numéros d'identification qu'il est possible de générer est faible. En contrepartie, la sécurité sera plus grande.

Inversement, plus le champ contenant le numéro d'identification (IN) est grand, plus on augmente le nombre de numéros d'identification possibles. Dans un même temps, on diminue la sécurité.

L'un des problèmes consiste à trouver un bon équilibre entre ces deux contraintes contradictoires.

Les supports physiques tels que les "cartes à gratter" comportant un tel numéro ont généralement une durée de validité limitée, mais qui peut être relativement longue, par exemple deux ans. Comme ces numéros ont une longueur finie, il est nécessaire de s'assurer qu'il sera possible, pendant toute la durée de validité des cartes, de générer des numéros sécurisés différents. Pour ceci, il est donc nécessaire de prévoir que la partie formant le numéro d'identification soit suffisamment grande. Si cette partie est trop courte, il ne sera plus possible après un certain temps d'utilisation du système c'est-à-dire après la création d'un certain nombre de numéros sécurisés, de générer de nouveaux numéros. On aura épuisé toutes les possibilités qu'offre la taille du numéro d'identification. Il est donc nécessaire, dès le départ, de prévoir une place suffisamment grande pour générer suffisamment de numéros d'identification distincts pendant la période de validité d'une carte. Ceci se fait au détriment de la sécurité. En effet, comme la longueur totale du numéro sécurisé est limitée, plus la place prise pour les numéros d'identification est grande, plus celle qui reste pour la valeur de contrôle est faible.

### EXPOSÉ DE L'INVENTION

L'invention concerne une méthode selon la revendication 1, un support physique selon la revendication 6 et un ensemble de supports physiques selon la revendication 8.

La présente invention se propose de fournir un procédé permettant de générer des numéros sécurisés valables pendant une durée donnée, ces numéros sécurisés ayant un niveau de sécurité optimal, tout en conservant la possibilité de créer des numéros supplémentaires ou d'augmenter le niveau de sécurité en fonction des besoins.

La méthode de l'invention permet donc de générer autant de numéros sécurisés que nécessaire, tout en ayant un niveau de sécurité maximal, ce qui diminue d'autant les risques que l'envoi d'un numéro au hasard permette l'attribution de droits ou d'un crédit. Les paramètres contradictoires de quantité de numéros générés et de sécurité peuvent être corrigés en tout temps.

Les buts de l'invention sont atteints par une méthode pour générer une pluralité de numéros sécurisés (SN) uniques ayant une longueur fixe prédéfinie, les numéros sécurisés étant formés au moins d'un numéro d'identification (IN) et d'une valeur de contrôle (VC), cette méthode comportant les étapes de :
- détermination d'une première quantité de numéros sécurisés à générer;
- détermination du nombre minimal de chiffres nécessaires pour générer ladite première quantité de numéros sécurisés;
- génération d'une première série de numéros d'identification (IN) uniques, ces numéros d'identification ayant une longueur au moins égale au nombre minimal de chiffres nécessaires pour générer les numéros sécurisés (SN), ces numéros d'identification étant sélectionnés parmi tous les numéros possibles ayant la longueur requise;
- association d'une valeur de contrôle (VC) à chaque numéro d'identification (IN), cette valeur de contrôle ayant une longueur telle que la longueur totale des numéros sécurisés corresponde à ladite longueur fixe prédéfinie;
- avant utilisation de tous les numéros d'identification disponibles de la première série de numéros d'identification, détermination d'une seconde quantité additionnelle de numéros sécurisés à générer;
- calcul du nombre de numéros d'identification restant qu'il est possible de générer à partir du nombre de chiffres formant les numéros d'identification de ladite première série;
- si la seconde quantité de numéros d'identification à générer est supérieure audit nombre de numéros d'identification restant, détermination du nouveau nombre minimal de chiffres nécessaires pour générer ladite seconde quantité de numéros d'identification;
- détermination d'au moins un numéro d'identification non-utilisé parmi les numéros d'identification qu'il est possible de générer en utilisant le nombre de chiffres de la première quantité de numéros d'identification;
- génération d'une seconde série de numéros d'identification (IN) uniques, ces numéros d'identification étant formés à partir de numéro d'identification non-utilisés parmi les numéros d'identification qu'il est possible de générer en utilisant le nombre de chiffres de la première quantité de numéros d'identification, ces numéros d'identification de la seconde série de numéros ayant une longueur au moins égale au nouveau nombre minimal de chiffres nécessaires pour générer lesdits numéros d'identification (IN) de cette seconde série de numéros.

Dans le cadre de l'invention, les numéros sécurisés générés sont valables pour un temps fini, par exemple deux ans. Les numéros qui ont été générés, mais qui n'ont pas été utilisés pendant ce temps fini ne sont plus valables. Il est clair que tous les numéros sécurisés ne sont pas générés en même temps. Au contraire, ils sont générés par lots, par exemple tous les mois. Il est donc possible qu'au début de la mise en place d'un service utilisant de tels numéros sécurisés, la quantité de numéros à générer au cours des premiers mois soit inférieure à la quantité de numéros à générer après une longue période d'utilisation. Le procédé de l'invention permet alors d'adapter la quantité de numéros de sécurité générés et le niveau de sécurité pendant chaque intervalle temporel.

De plus, ce procédé est basé sur une estimation de la quantité de numéros sécurisés à générer au cours d'un intervalle temporel. Si cette estimation est erronée, que ce soit dans un sens optimiste ou pessimiste, il est possible de corriger la quantité de numéros sécurisés et le niveau de sécurité pendant un intervalle temporel.

Pour réaliser ceci, on détermine la durée de validité des numéros sécurisés. Cette durée est généralement imposée par le fournisseur de "supports physiques" comportant ces numéros sécurisés. On choisit ensuite une période temporelle qui est au maximum égale à la durée de validité, mais qui est généralement une fraction de cette durée de validité. On estime ensuite la quantité de numéros sécurisés différents qu'il faudra générer au cours de cette période temporelle. On détermine ensuite la grandeur du champ représentant le numéro d'identification en fonction de la quantité de numéros sécurisés estimée. Ainsi, ce champ a une longueur variable en fonction de l'estimation qui a été faite. Les chiffres restants sont utilisés pour représenter la valeur de contrôle.

Si la grandeur du champ réservé pour générer les numéros d'identification n'est pas suffisante au cours d'une unité temporelle, on peut déplacer la frontière au cours de l'unité temporelle vers la droite, de façon à ajouter des numéros possibles. Si au contraire, les prévisions étaient trop optimistes et que la grandeur du champ pour les numéros d'identification était trop grande, il est possible de déplacer la frontière vers la gauche, ce qui améliore la sécurité.

Ces déplacements de frontière peuvent se faire au cours d'une unité temporelle ou à la fin d'une telle unité, pour l'unité temporelle suivante.

L'utilisation d'un tel numéro de sécurité est bien entendu soumis à une vérification qui permet de déterminer si la valeur de contrôle envoyée correspond bien au numéro d'identification reçu. La méthode selon l'invention permet une vérification optimale et permet notamment de détecter une tentative d'attaque systématique à partir d'un numéro d'identification donné.

### DESCRIPTION SOMMAIRE DES DESSINS

La présente invention et ses avantages seront mieux compris en référence aux figures annexées et à la description détaillée d'un mode de réalisation particulier, dans lesquelles :

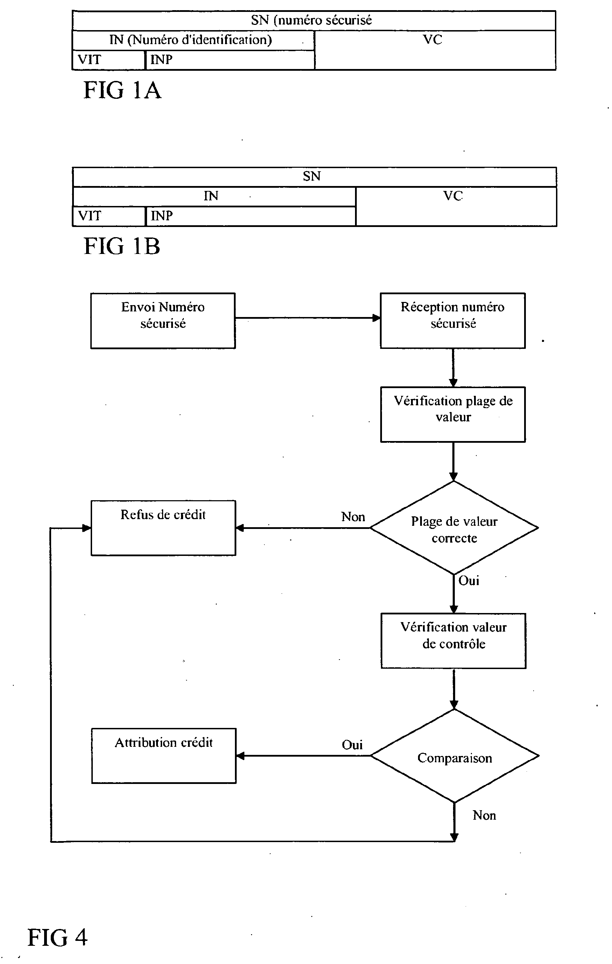

- la figure 1A représente la structure d'un premier numéro sécurisé généré selon la méthode de l'invention;
- la figure 1B représente la structure d'un deuxième numéro sécurisé généré selon la méthode de l'invention;
- la figure 2A représente un tableau sous forme de valeurs décimales, de nombre sécurisés générés selon la présente invention;
- la figure 2B est une variante du tableau de la figure 2A;
- la figure 3A représente un tableau contenant des numéros sécurisés générés selon la méthode de l'invention;
- la figure 3B est une variante du tableau de la figure 2A
- la figure 3C est une autre variante du tableau de la figure 2A;
- la figure 4 est un schéma bloc représentant la vérification d'un numéro sécurisé généré conformément à la présente invention.

### MANIÈRE(S) DE RÉALISER L'INVENTION

Dans la pratique, il est clair que le nombre de numéros sécurisés différents qu'il doit être possible de générer doit être relativement grand pour répondre à la totalité de la demande.

Toutefois, dans la description du principe de l'invention, on utilisera des valeurs suffisamment faibles pour pouvoir les manipuler facilement.

Selon la présente invention, et comme dans l'art antérieur, le numéro sécurisé (SN) comporte d'une part un numéro d'identification (IN) et d'autre part une valeur de contrôle (VC) qui dépend de ce numéro d'identification. Ce numéro sécurisé est généralement inscrit sur un support physique tel qu'une carte du type "carte à gratter" ou un récépissé de paiement par exemple. Il pourrait également être affiché à un écran tel qu'un écran d'ordinateur ou de télévision. Dans la suite de la description, il est supposé que le support est une carte. Dans tous les cas, le principe de fonctionnement est le même.

Selon un exemple de réalisation concret, le nombre inscrit sur le support, c'est-à-dire le numéro sécurisé SN est un nombre décimal qui peut par exemple comporter 16 chiffres, ce nombre de chiffre étant défini par l'opérateur. Pour le traitement de ce nombre dans un centre de gestion ou de vérification, il est converti en un nombre binaire.

Comme on peut le calculer, un nombre décimal de 16 chiffres peut être représenté sous forme binaire au moyen de 53 chiffres binaires ou 53 bits, du fait que 2⁵³ est un nombre à 16 chiffres alors que 2⁵⁴ comporte 17 chiffres. Cette valeur de 53 bits est donc la longueur totale du numéro d'identification IN et de la valeur de contrôle VC.

La méthode de la présente invention fonctionne de la manière suivante. On détermine tout d'abord une durée de validité maximale d'une carte. Cette durée, qui dans la suite de la description est fixé à deux ans, est généralement imposée par l'opérateur.

On divise ensuite cette durée maximale en intervalles temporels plus courts, de telle manière que le nombre d'intervalles soit "raisonnable" et que la quantité de numéros sécurisés à générer au cours d'un intervalle temporel soit suffisamment importante. A titre d'exemple, pour une durée maximale de 2 ans, un intervalle temporel d'un mois est une valeur correcte.

A partir de la durée maximale et de l'intervalle choisi, on détermine le nombre de chiffres dont il faut disposer pour représenter tous les intervalles. Plus concrètement, pour des intervalles d'un mois pendant une période de 2 ans, il y aura 24 mois. En mode décimale, il faudra deux chiffres pour représenter chacun des 24 mois. En mode binaire, il faudra 5 chiffres binaires ou 5 bits pour représenter les 24 mois, puisque 2⁴ est égale à 16 qui est inférieur à 24 et donc pas suffisant alors que 2⁵ = 32 est suffisant pour représenter 24 valeurs différentes.

Selon l'invention, le numéro d'identification IN est séparé en une valeur représentant l'intervalle temporel VIT et une partie numérique d'identification INP. La durée de l'intervalle temporel VIT est en principe fixe. Elle est généralement incrémentée de 1 à chaque changement de période temporelle. Ainsi, pour un mois et une année donnés, par exemple août, elle vaudra 00000, puis 00001 en septembre suivant et ainsi de suite jusqu'à 11111. Ensuite, le cycle recommence. Etant donné que la durée de validité maximale est écoulée avant que le cycle ne recommence, il ne peut pas y avoir deux cartes valides identiques.

La longueur totale du numéro sécurisé moins la longueur réservée pour l'intervalle temporel est donc disponible pour la partie numérique et la valeur de contrôle.

L'étape suivante du procédé consiste à évaluer la quantité de numéros sécurisés différents qu'il faudra générer au cours du prochain intervalle temporel. Cette évaluation peut se faire généralement d'après des indications données par l'opérateur. Comme cela est expliqué en détails ci-dessous, l'un des avantages de la méthode de l'invention est de permettre une correction simple de la quantité de numéros sécurisés générés au cours d'un intervalle temporel. Ainsi, en particulier au début de la mise en place du système, si les évaluations sont trop optimistes ou au contraire trop pessimistes, il est possible d'effectuer des modifications au cours d'un intervalle temporel.

Lorsque l'on a évalué la quantité de numéros sécurisés à générer pendant l'intervalle temporel concerné, on détermine ensuite la longueur minimale nécessaire pour générer cette quantité de numéros. A titre d'exemple, si l'on évalue le nombre de numéros sécurisés à générer pendant un mois donné à 100'000, il faudra 17 bits. En effet, 16 bits sont insuffisants puisque 2¹⁶ = 65'536 est inférieur à la quantité évaluée alors que 2¹⁷ = 131'072 est supérieur à la quantité évaluée.

On choisira ensuite, parmi les numéros sécurisés possibles, c'est-à-dire dans l'exemple considéré, parmi 131'072 numéros, un certain nombre de numéros différents, jusqu'à atteindre la quantité désirée, à savoir 100'000 dans notre exemple.

La longueur totale du numéro sécurisé SN moins la longueur utilisée par l'intervalle temporel VIT moins celle utilisée pour la partie numérique INP nous donne la longueur totale utilisable pour la valeur de contrôle. En reprenant l'exemple concret décrit ci-dessus, pour 53 bits de numéro sécurisé, il y a 5 bits pour l'intervalle temporel, 17 bits pour la partie numérique, ce qui correspond à un total de 22 bits pour le numéro d'identification. La valeur de contrôle VC à donc une longueur de 53-22=31 bits.

Cette valeur de contrôle dépend du numéro d'identification. Selon une manière de générer cette valeur de contrôle, on prend le numéro d'identification, auquel on ajoute éventuellement des informations, puis on applique une opération à l'ensemble. Une telle opération pourrait par exemple être une fonction de hachage à clé ou toute autre fonction dans laquelle il est nécessaire de connaître un secret pour calculer la valeur de contrôle à partir du numéro d'identification.

### Modification de la quantité de numéros sécurisés disponibles

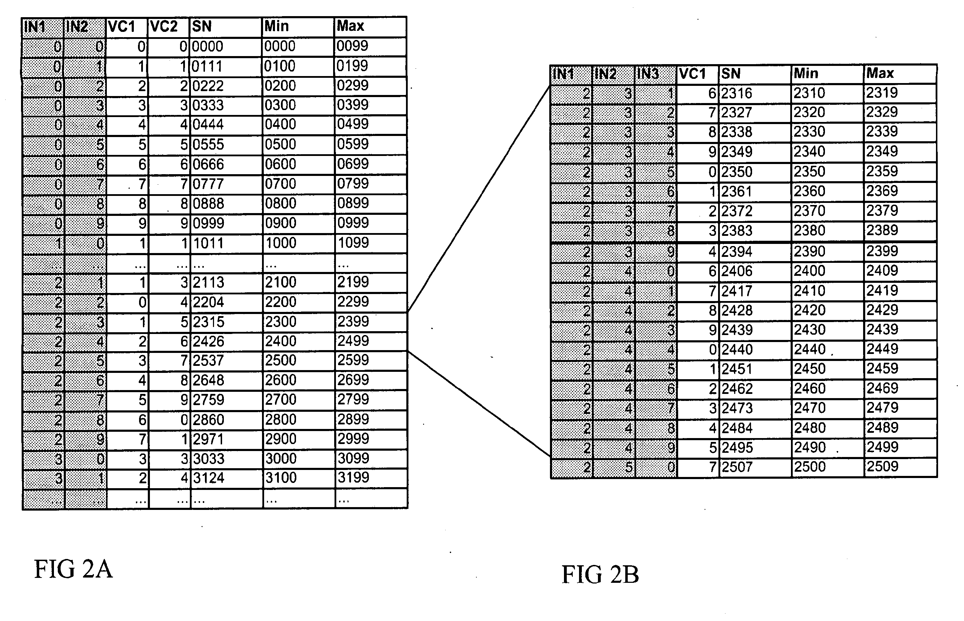

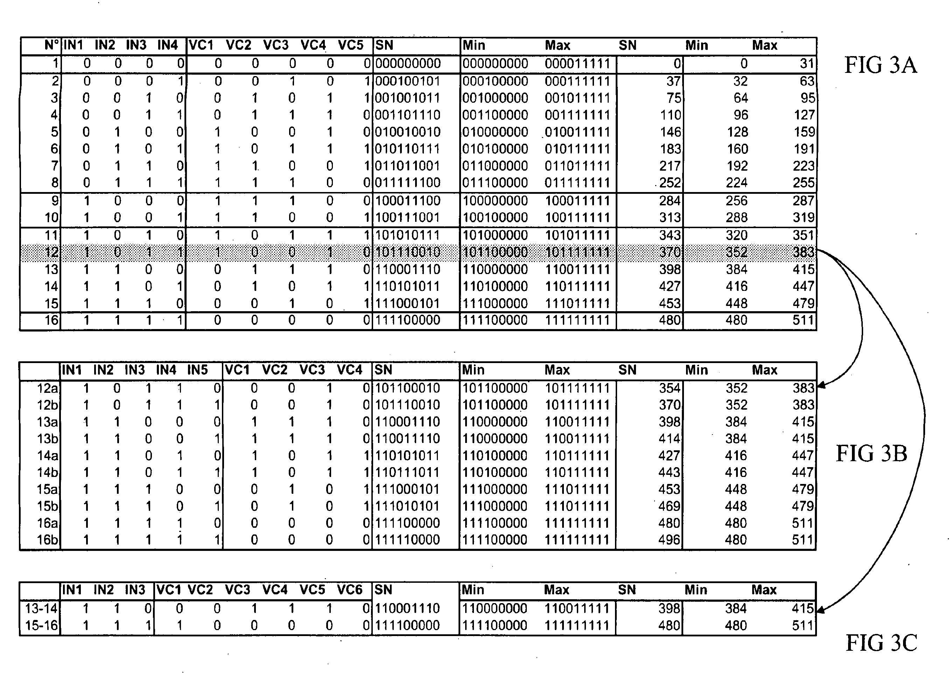

La suite de la description se base sur les figures 2 et 3 et concerne le fonctionnement de la méthode lorsque l'on doit générer une quantité de numéros sécurisés différente de ce qui a été initialement évalué.

Les figures 2A et 2B décrit un exemple dans lequel l'identifiant de l'intervalle temporel est omis pour des raisons de clarté et le numéro sécurisé comporte 4 chiffres décimaux.

Dans un premier temps, on a estimé qu'il sera nécessaire de générer au maximum 100 numéros sécurisés. Pour ceci, deux chiffres décimaux suffisent. Les deux premières colonnes IN1 et IN2 de la figure 2A contiennent les valeurs possibles pour générer 100 numéros différents, c'est-à-dire les valeurs de 00 à 99. La valeur de contrôle comporte également 2 chiffres de façon à respecter une longueur totale de 4 chiffres. Cette valeur de contrôle est indiquée dans les colonnes notées VC1 et VC2 de la figure 2A. Dans l'exemple choisi, la colonne VC1 contient la valeur absolue de la différence entre les deux chiffres composant le numéro d'identification et la colonne VC2 contient leur somme modulo 10.

Le numéro sécurisé SN est formé de la concaténation des 4 chiffres indiqués dans les colonnes IN1, IN2, VC1 et VC2.

Comme indiqué précédemment, en prenant deux chiffres décimaux, il est possible de générer 100 numéros sécurisés différents. Si au cours de l'intervalle temporel, il s'avère que la quantité estimée de numéros sécurisés est insuffisante, il est possible d'en ajouter, ce qui est illustré par la figure 2B.

Dans cette figure, le numéro d'identification n'est plus formé de 2 chiffres, mais de trois, notés IN1, IN2 et IN3 dans la figure. Il en résulte qu'à partir d'une ligne du tableau de la figure 2A, représentant un numéro sécurisé, il est possible de générer 10 lignes dans le tableau de la figure 2B, représentant dix numéros sécurisés.

Dans ce cas, la valeur de contrôle ne comporte plus qu'un chiffre, ici la somme modulo 10 des chiffres formant le numéro d'identification, de façon à conserver la longueur totale de 4 chiffres.

Les figures 3A, 3B et 3C illustrent un exemple similaire, dans lequel le nombre inscrit sur la carte est décimal, mais les valeurs utilisées pour le traitement et la génération de ces nombres est binaire, ce qui est généralement le cas dans la pratique.

Dans l'exemple de la figure 3A, on suppose que la longueur totale du numéro sécurisé est de 9 bits et que la longueur du numéro d'identification est de 4 bits. Cela permet de générer 16 numéros sécurisés différents, notés de 1 à 16 dans la colonne gauche de la figure.

Imaginons qu'à partir du 11^{ème} numéro sécurisé généré, il est constaté que 16 possibilités ne sont pas suffisantes, on pourra, comme illustré par le tableau de la figure 3B, utiliser un bit supplémentaire pour générer le numéro d'identification. Ainsi, le 12^{ème} numéro d'identification, qui est 1011 sur la figure 3A, peut être scindé en 10110 et 10111. Il en va de même pour les numéros suivants. Ainsi, chaque numéro sécurisé de la figure 3A peut donner lieu à 2 numéros sécurisés comme indiqués dans la figure 3b.

En contrepartie, au lieu de 5 bits disponibles pour la valeur de contrôle dans la figure 3A, il n'en reste plus que 4 dans la figure 3B. La sécurité se trouve donc affaiblie.

Si au contraire, on constate que la quantité de numéros disponibles est trop grande, il est possible, comme illustré par la figure 3C, de diminuer cette quantité en n'utilisant plus que trois bits pour générer le numéro d'identification. Ainsi, les numéros 13 et 14 de la figure 3A, c'est-à-dire 1100 et 1101 ne forment plus qu'une seule possibilité dans la figure 3C, à savoir 110. En contrepartie, la valeur de contrôle est codée sur 6 bits, ce qui améliore la sécurité.

Cette souplesse dans la modification des nombres de chiffres binaires ou décimaux utilisés pour former le numéro d'identification et la valeur de contrôle offre deux avantages. D'une part, cela permet de modifier la quantité de numéros sécurisés qu'il est possible de générer et la sécurité associée, pendant un intervalle temporel, pour corriger par exemple une estimation erronée. D'autre part, cela permet d'adapter cette quantité au début de chaque intervalle temporel, en fonction notamment de l'évolution de l'utilisation des numéros sécurisés.

### Vérification d'un numéro sécurisé envoyé

La description qui précède concerne la manière de générer des numéros sécurisés ainsi que leur structure.

La suite de la description concerne plutôt l'utilisation d'un tel numéro sécurisé, et plus particulièrement la détermination, par un organe de contrôle, de l'authenticité d'un numéro reçu de la part d'un utilisateur.

Lorsqu'un utilisateur envoie un numéro sécurisé, une vérification en deux étapes est prévue pour déterminer si ce numéro est authentique et donne droit à un crédit par exemple, ou s'il est faux.

### Etape 1

Dans la première étape, le numéro est envoyé à un centre de gestion. Il est à noter que ce centre ne connaît pas nécessairement la longueur du numéro d'identification puisque celle-ci peut varier au cours d'un intervalle temporel. Par contre, à partir du numéro d'identification IN, il peut connaître une plage de valeurs dans laquelle se trouve ce numéro. A titre d'exemple, en reprenant le cas de la figure 3A, imaginons que parmi les 16 possibilités mentionnées, on ait choisi les possibilités N° 2 à 8 et 11 à 15 pour produire des numéros sécurisés mis en circulation. Les autres possibilités n'ont pas donné lieu à des numéros sécurisés mis en circulation.

Pour chaque numéro sécurisé mis en circulation, on déterminera une valeur minimale et une valeur maximale associée à ce numéro. En prenant par exemple le numéro sécurisé portant la référence 2 sur la figure 3A, le numéro d'identification correspond est 0001. Le numéro sécurisé est formé de 8 bits. La valeur minimale que peut prendre le numéro sécurisé ayant 0001 en tant que quatre premiers bits de poids fort est 00010000, ce qui correspond au numéro d'identification concaténé avec des 0, jusqu'à atteindre la longueur voulue. De manière similaire, la valeur maximale correspond au numéro d'identification concaténé avec des 1, soit 00011111. En convertissant ces nombres en valeurs décimales, on a une borne inférieure égale à 32 et une borne supérieure égale à 63.

Dans les figures 3A, 3B et 3C, les bornes inférieures des intervalles apparaissent dans la colonne notée "Min" et les bornes supérieure dans la colonne notée "Max".

Le centre de gestion ne connaît pas les numéros sécurisés exacts, mais connaît les plages associées aux numéros sécurisés qui ont été attribués.

Si un utilisateur envoie le numéro sécurisé 284, correspond au cas 9 de la figure 3A, en partant de l'hypothèse que ce numéro sécurisé n'ait pas été attribué, les centre de gestion va vérifier si cette valeur de 284 appartient à une plage authentique. En reprenant l'hypothèse précédente, les plages de valeurs attribuées sont 32-255; 320-479. La valeur 284 ne fait partie d'aucune plage attribuée. Elle sera donc considérée par le centre de gestion comme une valeur fausse et le droit ou le crédit associé ne sera pas attribué. Le numéro envoyé n'ayant pas passé cette première étape de vérification, il n'est pas transmis pour subir la deuxième étape.

Si l'utilisateur envoie le numéro sécurisé correspondant au cas 12, à savoir 370, le centre de gestion pourra déterminer que cette valeur fait bien partie des plages valides et pourra passer à la deuxième étape de vérification.

### Etape 2

Dans cette deuxième étape, le numéro sécurisé est transmis à un centre de vérification. Celui-ci contient d'une part la liste des numéros d'identification IN valides et d'autre part, la valeur de contrôle VC associée. Comme indiqué précédemment, cette valeur de contrôle est formée du numéro d'identification auquel on ajoute éventuellement des informations et auquel on applique une opération. Cette opération peut par exemple être un chiffrement, une fonction de hachage à clé ou toute autre opération qui ne permette pas facilement de trouver les informations de départ en connaissant la valeur de contrôle.

Il est à noter que le numéro sécurisé est généralement donné sous forme décimale alors qu'il est traité sous forme binaire dans le centre de gestion et dans le centre de vérification. Avant les opérations de contrôle, la valeur décimale reçue est donc généralement transformée en valeur binaire.

Il est également à noter que le numéro sécurisé pourrait être inscrit sous forme alphanumérique, pour autant que les moyens de transmission soient appropriés. Dans ce cas, ce code alphanumérique devrait être converti en un format utilisable par le centre de gestion, typiquement sous forme binaire.

A réception du numéro d'identification IN, le centre de vérification ajoute les informations mentionnées précédemment et applique la fonction de hachage à clé, avec par exemple la clé du mois. Il compare ensuite le résultat calculé au résultat attendu, celui-ci étant mémorisé dans le centre de vérification.

Si le résultat calculé correspond au résultat attendu, le numéro sécurisé est considéré comme valide et le crédit ou le droit est accordé. Sinon, le crédit ou le droit est refusé.

Dans le cas où le numéro sécurisé est envoyé après la fin de la période de validité, même sil e numéro d'identification est correct, la clé ou le secret utilisé pour calculer la valeur de contrôle à partir du numéro d'identification aura changé. Dans ce cas, la valeur de contrôle calculée sera différente de la valeur de contrôle attendue et le numéro sécurisé sera considéré comme invalide.

## Revendications

1. Méthode pour attribuer un numéro sécurisé unique à un support physique, ce numéro sécurisé unique étant généré par une méthode pour générer une pluralité de numéros sécurisés (SN) uniques ayant une longueur fixe prédéfinie, les numéros sécurisés étant formés au moins d'un numéro d'identification (IN) et d'une valeur de contrôle (VC), ladite méthode d'attribution d'un numéro sécurisé comportant les étapes de :
• détermination d'une première quantité de numéros sécurisés à générer;
• détermination du nombre minimal de chiffres nécessaires pour générer ladite première quantité de numéros sécurisés;
• génération d'une première série de numéros d'identification (IN) uniques, ces numéros d'identification ayant une longueur au moins égale au nombre minimal de chiffres nécessaires pour générer les numéros sécurisés (SN), ces numéros d'identification étant sélectionnés parmi tous les numéros possibles ayant la longueur requise;
• association d'une valeur de contrôle (VC) à chaque numéro d'identification (IN), cette valeur de contrôle ayant une longueur telle que la longueur totale des numéros sécurisés corresponde à ladite longueur fixe prédéfinie, cette valeur de contrôle (VC) étant calculée à partir dudit numéro d'identification, d'un secret et d'une règle de calcul ;
• avant utilisation de tous les numéros d'identification disponibles de la première série de numéros d'identification, détermination d'une seconde quantité additionnelle de numéros sécurisés à générer;
• calcul du nombre de numéros d'identification restant qu'il est possible de générer à partir du nombre de chiffres formant les numéros d'identification de ladite première série;
• si la seconde quantité de numéros d'identification à générer est supérieure audit nombre de numéros d'identification restant, détermination du nouveau nombre minimal de chiffres nécessaires pour générer ladite seconde quantité de numéros d'identification;
• détermination d'au moins un numéro d'identification non-utilisé parmi les numéros d'identification qu'il est possible de générer en utilisant le nombre de chiffres de la première quantité de numéros d'identification;
• génération d'une seconde série de numéros d'identification (IN) uniques, ces numéros d'identification étant formés à partir de numéro d'identification non-utilisés parmi les numéros d'identification qu'il est possible de générer en utilisant le nombre de chiffres de la première quantité de numéros d'identification, ces numéros d'identification de la seconde série de numéros ayant une longueur au moins égale au nouveau nombre minimal de chiffres nécessaires pour générer lesdits numéros d'identification (IN) de cette seconde série de numéros;
• choix d'un numéro sécurisé unique parmi ladite pluralité de numéros sécurisés uniques générés; et
• impression dudit numéro unique choisi sur un support physique.

2. Méthode selon la revendication 1, **caractérisé en ce que**
• si la seconde quantité de numéros sécurisés à générer est inférieure audit nombre de numéros sécurisés restant, détermination du nouveau nombre minimal de chiffres nécessaires pour générer ladite seconde quantité de numéros sécurisés;
• détermination du nombre de numéros d'identification qu'il est possible de générer en utilisant ledit nombre minimal de chiffres nécessaires pour générer ladite seconde quantité de numéros d'identification, ces nouveaux numéros d'identification étant différents des numéros d'identification de la première série tronqués à la longueur des numéros d'identification de la deuxième série;
• si le nombre de numéros d'identification qu'il est possible de générer en utilisant ledit nombre minimal de chiffres est supérieur à la seconde quantité, génération d'une série de numéros d'identification uniques, ayant une longueur égale audit nombre minimal de chiffres nécessaires pour générer ladite nouvelle quantité de numéros d'identification et tels que ces nouveaux numéros sécurisés sont différents des numéros sécurisés de la première série tronqués à la longueur des numéros d'identification de la deuxième série.

3. Méthode selon la revendication 1 ou 2, **caractérisé en ce que** l'on détermine le nombre de numéros sécurisé à générer au cours d'un intervalle temporel.

4. Méthode selon la revendication 3, **caractérisé en ce que** ledit intervalle temporel correspond à tout ou partie d'une dure de validité maximale du numéro sécurisé.

5. Méthode selon la revendication 1, **caractérisée en ce que** ledit support physique est utilisé pour accéder à des droits et/ou obtenir un crédit.

6. Support physique pour l'accès à un droit et/ou un crédit, comportant un numéro sécurisé (SN) unique ayant une longueur fixe prédéfinie, ce numéro sécurisé étant formé au moins d'un numéro d'identification (IN) et d'une valeur de contrôle (VC), **caractérisé en ce que** ledit numéro sécurisé unique est généré par les étapes suivantes :
• détermination d'une première quantité de numéros sécurisés à générer;
• détermination du nombre minimal de chiffres nécessaires pour générer ladite première quantité de numéros sécurisés;
• génération d'une première série de numéros d'identification (IN) uniques, ces numéros d'identification ayant une longueur au moins égale au nombre minimal de chiffres nécessaires pour générer les numéros sécurisés (SN), ces numéros d'identification étant sélectionnés parmi tous les numéros possibles ayant la longueur requise;
• association d'une valeur de contrôle (VC) à chaque numéro d'identification (IN), cette valeur de contrôle ayant une longueur telle que la longueur totale des numéros sécurisés corresponde à ladite longueur fixe prédéfinie, cette valeur de contrôle (VC) étant calculée à partir dudit numéro d'identification, d'un secret et d'une règle de calcul;
• avant utilisation de tous les numéros d'identification disponibles de la première série de numéros d'identification, détermination d'une seconde quantité additionnelle de numéros sécurisés à générer;
• calcul du nombre de numéros d'identification restant qu'il est possible de générer à partir du nombre de chiffres formant les numéros d'identification de ladite première série;
• si la seconde quantité de numéros d'identification à générer est supérieure audit nombre de numéros d'identification restant, détermination du nouveau nombre minimal de chiffres nécessaires pour générer ladite seconde quantité de numéros d'identification;
• détermination d'au moins un numéro d'identification non-utilisé parmi les numéros d'identification qu'il est possible de générer en utilisant le nombre de chiffres de la première quantité de numéros d'identification;
• génération d'une seconde série de numéros d'identification (IN) uniques, ces numéros d'identification étant formés à partir de numéro d'identification non-utilisés parmi les numéros d'identification qu'il est possible de générer en utilisant le nombre de chiffres de la première quantité de numéros d'identification, ces numéros d'identification de la seconde série de numéros ayant une longueur au moins égale au nouveau nombre minimal de chiffres nécessaires pour générer lesdits numéros d'identification (IN) de cette seconde série de numéros;
• choix d'un numéro sécurisé (SN) unique parmi les numéros sécurisés uniques générés;
• impression dudit numéro sécurisé (SN) unique choisi sur ledit support physique.

7. Support physique selon la revendication 6, **caractérisé en ce que** ledit numéro sécurisé unique est imprimé sur ledit support physique.

8. Ensemble de supports physiques pour l'accès à un droit et/ou un crédit, chaque support physique comportant un numéro sécurisé (SN) unique ayant une longueur fixe prédéfinie, ce numéro sécurisé étant formé au moins d'un numéro d'identification (IN) et d'une valeur de contrôle (VC), **caractérisé en ce que** ledit numéro sécurisé unique est généré par les étapes suivantes :
• détermination d'une première quantité de numéros sécurisés à générer;
• détermination du nombre minimal de chiffres nécessaires pour générer ladite première quantité de numéros sécurisés;
• génération d'une première série de numéros d'identification (IN) uniques, ces numéros d'identification ayant une longueur au moins égale au nombre minimal de chiffres nécessaires pour générer les numéros sécurisés (SN), ces numéros d'identification étant sélectionnés parmi tous les numéros possibles ayant la longueur requise;
• association d'une valeur de contrôle (VC) à chaque numéro d'identification (IN), cette valeur de contrôle ayant une longueur telle que la longueur totale des numéros sécurisés corresponde à ladite longueur fixe prédéfinie, cette valeur de contrôle (VC) étant calculée à partir dudit numéro d'identification, d'un secret et d'une règle de calcul;
• avant utilisation de tous les numéros d'identification disponibles de la première série de numéros d'identification, détermination d'une seconde quantité additionnelle de numéros sécurisés à générer;
• calcul du nombre de numéros d'identification restant qu'il est possible de générer à partir du nombre de chiffres formant les numéros d'identification de ladite première série;
• si la seconde quantité de numéros d'identification à générer est supérieure audit nombre de numéros d'identification restant, détermination du nouveau nombre minimal de chiffres nécessaires pour générer ladite seconde quantité de numéros d'identification;
• détermination d'au moins un numéro d'identification non-utilisé parmi les numéros d'identification qu'il est possible de générer en utilisant le nombre de chiffres de la première quantité de numéros d'identification;
• génération d'une seconde série de numéros d'identification (IN) uniques, ces numéros d'identification étant formés à partir de numéro d'identification non-utilisés parmi les numéros d'identification qu'il est possible de générer en utilisant le nombre de chiffres de la première quantité de numéros d'identification, ces numéros d'identification de la seconde série de numéros ayant une longueur au moins égale au nouveau nombre minimal de chiffres nécessaires pour générer lesdits numéros d'identification (IN) de cette seconde série de numéros;
• choix d'une quantité de numéros sécurisés (SN) uniques différents parmi les numéros sécurisés uniques générés, cette quantité étant au moins égale au nombre de supports physiques formant l'ensemble de supports physiques;
• impression sur chacun desdits supports physiques formant ledit ensemble de supports physiques, d'un numéro sécurisé (SN) unique différent choisi parmi lesdits numéros sécurisés (SN) uniques générés.

## Patentansprüche

1. Verfahren zur Zuteilung einer eindeutigen sicheren Zahl an einen materiellen Träger, wobei diese eindeutige sichere Zahl mit einem Verfahren zur Erzeugung eine Vielzahl von eindeutigen sicheren Zahlen (SN) mit einer vorherbestimmten festen Länge erzeugt wird und die sicheren Zahlen mindestens aus einer Identifizierungsnummer (IN) und einem Kontrollwert (VC) bestehen, wobei das Verfahren zur Zuteilung einer gesicherten Zahl die folgenden Phasen umfasst:
- Festlegung einer erster Menge von zu erzeugenden sicheren Zahlen;
Festlegung der Mindestanzahl der Ziffern, die notwendig sind, um besagte erste Menge von sicheren Zahlen zu erzeugen;
- Erzeugung einer erster Reihe von eindeutigen Identifizierungsnummern (IN), wobei diese Identifizierungsnummern eine Länge aufweisen, die mindestens gleich der Mindestanzahl der Ziffern ist, die notwendig sind, um die sicheren Zahlen (SN) zu erzeugen, wobei diese Identifizierungsnummern unter allen möglichen Zahlen mit der erforderlichen Länge ausgewählt werden;
- Zuteilung eines Kontrollwert (VC) an jede Identifizierungsnummer (IN), wobei dieser Kontrollwert eine solche Länge aufweist, dass die Gesamtlänge der sichere Zahlen besagter vorherbestimmten festen Länge entspricht, und wobei dieser Kontrollwert (VC) ausgehend von der Identifizierungsnummer, von einem Geheimnis und von einer Berechnungsregel berechnet wird;
- vor der Benutzung aller verfügbaren Identifizierungsnummern der ersten Reihe von Identifizierungsnummern Festlegung einer zweiten zusätzlichen Menge von zu erzeugenden sicheren Zahlen;
- Berechnung der verbleibenden Anzahl von Identifizierungsnummern, die man aus der Anzahl der Ziffern, die die Identifizierungsnummern der ersten Reihe bilden, erzeugen kann;
- wenn die zweite Menge von zu erzeugenden Identifizierungsnummern höher als die verbleibende Anzahl von Identifizierungsnummern ist, Ermittlung der neuen Mindestanzahl von Ziffern, die notwendig sind, um besagte zweite Menge von Identifizierungsnummern zu erzeugen;
- Ermittlung mindestens einer nicht benutzten Identifizierungsnummer unter den Identifizierungsnummern, die man aus der Anzahl von Ziffern der ersten Menge von Identifizierungsnummern erzeugen kann;
- Erzeugung einer zweiter Reihe von eindeutigen Identifizierungsnummern (IN), wobei diese Identifizierungsnummern aus nicht benutzten Identifizierungsnummern unter den Identifizierungsnummern, die man aus der Anzahl von Ziffern der ersten Menge von Identifizierungsnummern erzeugen kann, gebildet werden, wobei diese Identifizierungsnummern der zweiten Reihe von Zahlen eine Länge aufweisen, die mindestens gleich der neuen Mindestanzahl von Ziffern ist, die notwendig sind, um besagte Identifizierungsnummern (IN) von dieser zweiten Reihe von Zahlen zu erzeugen;
- Auswahl einer eindeutigen sicheren Zahl aus besagter Vielzahl von erzeugten eindeutigen sicheren Zahlen; und
- Aufdruck der genannten gewählten eindeutigen Zahl auf einen materiellen Träger.

2. Verfahren nach Anspruch 1, **gekennzeichnet dadurch dass**,
- wenn die zweite Menge von sicheren zu erzeugenden Zahlen niedriger als die genannte verbleibende Anzahl von sicheren Zahlen ist, Ermittlung der neuen Mindestanzahl von Ziffern, die notwendig sind, um besagte zweite Menge von sicheren Zahlen zu erzeugen;
- Ermittlung der Anzahl von Identifizierungsnummern, die man aus der Mindestanzahl von Ziffern erzeugen kann, die notwendig sind, um besagte zweite Menge von Identifizierungsnummern zu erzeugen, wobei diese neuen Identifizierungsnummern verschieden von den Identifizierungsnummern der ersten Reihe sind, die auf die Länge der Identifizierungsnummern der zweiten Reihe zurechtgeschnitten wurden;
- wenn die Anzahl von Identifizierungsnummern, die man aus der besagten Mindestanzahl von Ziffern erzeugen kann, höher ist als die zweite Menge, Erzeugung einer Reihe von eindeutigen Identifizierungsnummern, deren Länge gleich der genannten Mindestanzahl von Ziffern ist, die notwendig sind, um besagte neue Menge von Identifizierungsnummern zu erzeugen, sowie derart, dass diese neuen sichere Zahlen verschieden von den sicheren Zahlen der ersten Reihe sind, die auf die Länge der Identifizierungsnummern der zweiten Reihe zurechtgeschnitten wurden.

3. Verfahren nach Anspruch 1 oder 2, **gekennzeichnet dadurch, dass** man die Anzahl der zu erzeugenden sicheren Zahlen im Laufe eines Zeitintervalls bestimmt.

4. Verfahren nach Anspruch 3, **gekennzeichnet dadurch, dass** besagtes Zeitintervall der gesamten oder einem Teil einer maximalen Gültigkeitsdauer der gesicherten Zahl entspricht.

5. Verfahren nach Anspruch 1, **gekennzeichnet dadurch, dass** besagter materieller Träger benutzt wird, um Zugang zu Rechten zu haben und/oder einen Kredit zu erhalten.

6. Materieller Träger für den Zugang zu einem Recht und/oder einem Kredit, mit einer eindeutigen sicheren Zahl (SN) von vorherbestimmter fester Länge, wobei diese gesicherte Zahl mindestens aus einer Identifizierungsnummer (IN) und einem Kontrollwert (VC) besteht, **gekennzeichnet dadurch, dass** besagte eindeutige sichere Zahl durch die folgenden Schritte erzeugt wird:
- Festlegung einer erster Menge von zu erzeugenden sicheren Zahlen;
- Ermittlung der Mindestanzahl der Ziffern, die notwendig sind, um besagte erste Menge von sicheren Zahlen zu erzeugen;
- Erzeugung einer erster Reihe von eindeutigen Identifizierungsnummern (IN), wobei diese Identifizierungsnummern eine Länge aufweisen, die mindestens gleich der Mindestanzahl von Ziffern ist, die notwendig sind, um die sicheren Zahlen (SN) zu erzeugen, wobei diese Identifizierungsnummern unter allen möglichen Zahlen mit der erforderlichen Länge ausgewählt werden;
- Zuteilung eines Kontrollwerts (VC) an jede Identifizierungsnummer (IN), wobei dieser Kontrollwert eine solche Länge aufweist, dass die Gesamtlänge der sicheren Zahlen besagter vorherbestimmten festen Länge entspricht, wobei dieser Kontrollwert (VC) ausgehend von der Identifizierungsnummer, von einem Geheimnis und von einer Berechnungsregel berechnet wird.
- vor der Benutzung aller verfügbaren Identifizierungsnummern der ersten Reihe von Identifizierungsnummern Festlegung einer zweiten zusätzlichen Menge von zu erzeugenden sicheren Zahlen;
- Berechnung der verbleibenden Anzahl von Identifizierungsnummern, die man aus der Anzahl von Ziffern erzeugen kann, die die Identifizierungsnummern der ersten Reihe bilden;
- wenn die zweite Menge von zu erzeugenden Identifizierungsnummern höher ist als die verbleibende Anzahl von Identifizierungsnummern, Ermittlung der neuen Mindestanzahl von Ziffern, die notwendig sind, um besagte zweite Menge von Identifizierungsnummern zu erzeugen;
- Festlegung mindestens einer nicht benutzte Identifizierungsnummern unter den Identifizierungsnummern, die man aus der Anzahl von Ziffern der ersten Menge von Identifizierungsnummern erzeugen kann;
- Erzeugung einer zweiter Reihe von eindeutigen Identifizierungsnummern (IN) gebildet aus nicht benutzten Identifizierungsnummern unter den Identifizierungsnummern, die man aus der Anzahl von Ziffern der ersten Menge von Identifizierungsnummern erzeugen kann, wobei diese Identifizierungsnummern der zweiten Reihe von Zahlen eine Länge aufweisen, die mindestens gleich der neuen Mindestanzahl von Ziffern ist, die notwendig sind, um besagte Identifizierungsnummern (IN) dieser zweiten Reihe von Zahlen zu erzeugen;
- Auswahl einer eindeutigen gesicherter Zahl (SN) aus den erzeugten eindeutigen sicheren Zahlen;
- Aufdruck der ausgewählten eindeutigen gesicherten Zahl (SN) auf den genannten materiellen Träger.

7. Materieller Träger nach Anspruch 6, **gekennzeichnet dadurch, dass** besagte eindeutige sichere Zahl auf den materiellen Träger aufgedruckt ist.

8. Gruppe von materiellen Trägern für den Zugang zu einem Recht und/oder einem Kredit, wobei jeder materielle Träger eine eindeutige gesicherte Zahl (SN) von vorherbestimmter fester Länge aufweist, die mindestens aus einer Identifizierungsnummer (IN) und einem Kontrollwert (VC) besteht, **gekennzeichnet dadurch, dass** besagte eindeutige sichere Zahl durch die folgenden Schritte erzeugt wird:
- Festlegung einer erster Menge von zu erzeugenden sicheren Zahlen;
Ermittlung der Mindestanzahl von Ziffern, die notwendig sind, um besagte erste Menge von sicheren Zahlen zu erzeugen;
- Erzeugung einer erster Reihe von eindeutigen Identifizierungsnummern (IN), wobei diese Identifizierungsnummern eine Länge aufweisen, die mindestens gleich der Mindestanzahl von Ziffern ist, die notwendig sind, um die sicheren Zahlen (SN) zu erzeugen, wobei diese Identifizierungsnummern aus allen möglichen Zahlen mit der erforderlichen Länge ausgewählt werden;
- Zuteilung eines Kontrollwerts (VC) an jede Identifizierungsnummer (IN), wobei dieser Kontrollwert eine solche Länge aufweist, dass die Gesamtlänge der sicheren Zahlen besagter vorherbestimmten festen Länge entspricht, wobei der Kontrollwert (VC) ausgehend von der Identifizierungsnummer, von einem Geheimnis und von einer Berechnungsregel berechnet wird;
- vor der Benutzung aller verfügbarer Identifizierungsnummern der ersten Reihe von Identifizierungsnummern Festlegung einer zweiten zusätzlichen Menge von zu erzeugenden sicheren Zahlen;
- Berechnung der verbleibenden Anzahl von Identifizierungsnummern, die man aus der Anzahl von Ziffern erzeugen kann, die die Identifizierungsnummern der ersten Reihe bilden;
- wenn die zweite Menge von zu erzeugenden Identifizierungsnummern höher ist als die verbleibende Anzahl von Identifizierungsnummern, Ermittlung der neuen Mindestanzahl von Ziffern, die notwendig sind, um besagte zweite Menge von Identifizierungsnummern zu erzeugen;
- Festlegung mindestens einer nicht benutzten Identifizierungsnummer unter den Identifizierungsnummern, die man aus der Anzahl von Ziffern der ersten Menge von Identifizierungsnummern erzeugen kann;
- Erzeugung einer zweiten Reihe von eindeutigen Identifizierungsnummern (IN) aus nicht benutzten Identifizierungsnummern unter den Identifizierungsnummern, die man aus der Anzahl von Ziffern der ersten Menge von Identifizierungsnummern erzeugen kann, wobei diese Identifizierungsnummern der zweiten Reihe von Zahlen eine Länge aufweisen, die mindestens gleich der neuen Mindestanzahl von Ziffern ist, die notwendig sind, um besagte Identifizierungsnummern (IN) dieser zweiten Reihe von Zahlen zu erzeugen;
- Auswahl einer Menge von verschiedenen eindeutigen sicheren Zahlen (SN) aus den erzeugten eindeutigen sicheren Zahlen, wobei diese Menge mindestens gleich der Anzahl der materiellen Träger ist, die die Gruppe von materiellen Trägern bilden;
- Aufdruck einer verschiedenen eindeutigen sicheren Zahl (SN), die aus besagten erzeugten eindeutigen sicheren Zahlen (SN) ausgewählt wurde, auf jeden der genannten materiellen Träger, die besagte Gruppe von materiellen Trägern bilden.

## Claims

1. Method for assigning a unique secure number to a physical support, this unique secure number being generated by a method for generating a plurality of unique secure numbers (SN) having a predefined fixed length, the secure numbers being formed from at least one identification number (IN) and a control value (VC), this method for assigning a secure number comprising the steps of:
• determining a first quantity of secure numbers to be generated;
• determining the minimal number of digits required for generating said first quantity of secure numbers ;
• generating a first series of unique identification numbers (IN), these identification numbers having a length at least equal to the minimal number of digits required for generating the secure numbers (SN), these identification numbers being selected from all the possible numbers having the required length;
• associating a control value (VC) with each identification number (IN), this control value having a length such that the total length of the secure numbers will correspond to said predefined fixed length, said control value (VC) being calculated from the identification number, secret information and an arithmetic rule;
• prior to the use of all the available identification numbers of the first series of identification numbers, determining a second additional quantity of secure numbers to be generated;
• calculating the number of remaining identification numbers that can be generated from the number of digits forming the identification numbers of the said first series;
• if the second quantity of identification numbers to be generated is superior to the said number of remaining identification numbers, determining the new minimal number of digits required for generating the said second quantity of identification numbers;
• determining at least one non-used identification number among the identification numbers that can be generated using the number of digits of the first quantity of identification numbers;
• generating a second series of unique identification numbers (IN), these identification numbers being formed from unused identification numbers among the identification numbers that can be generated by using the number of digits of the first quantity of identification numbers, these identification numbers of the second series of numbers having a length at least equal to the new minimal number of digits required for generating said identification numbers (IN) of this second series of numbers;
• choosing a unique secure number among said plurality of generated unique secure numbers; and
• printing said chosen unique number on a physical support.

2. Method according to claim 1, **characterized in that**
• if the second quantity of secure numbers to be generated is lower than the said remaining quantity of secure numbers, determination of the new minimal number of digits required for generating the said second quantity of secure numbers;
• determination of the number of identification numbers that can be generated using said minimal number of digits required for generating said second quantity of identification numbers, these new identification numbers being different from the identification numbers of the first series truncated at the length of the identification numbers of the second series;
• if the amount of identification numbers that can be generated by using said minimal number of digits is higher than the second quantity, generation of a series of unique identification number, having a length equal to said minimal number of digits required for generating said new quantity of identification numbers and such that these new secure numbers are different from the secure numbers of the first series truncated at the length of the identification numbers of the second series.

3. Method according to claim 1 or 2, **characterized in that** the number of secure numbers to be generated during a temporal interval is determined.

4. Method according to claim 3, **characterized in that** said temporal interval corresponds to all or a part of a maximum validity duration for the secure number.

5. Method according to claim 1, **characterized in that** said physical support is used for accessing entitlements and/or obtaining a credit.

6. Physical support for accessing to an entitlement and/or obtaining a credit, comprising a unique secure number (SN) having a predefined fixed length, this secure number being formed from at least one identification number (IN) and a control value (VC), **characterized in that** said unique secure number is generated by the following steps :
• determining a first quantity of secure numbers to be generated;
• determining the minimal number of digits required for generating said first quantity of secure numbers ;
• generating a first series of unique identification numbers (IN), these identification numbers having a length at least equal to the minimal number of digits required for generating the secure numbers (SN), these identification numbers being selected from all the possible numbers having the required length;
• associating a control value (VC) with each identification number (IN), this control value having a length such that the total length of the secure numbers will correspond to said predefined fixed length, said control value (VC) being calculated from the identification number, secret information and an arithmetic rule;
• prior to the use of all the available identification numbers of the first series of identification numbers, determining a second additional quantity of secure numbers to be generated;
• calculating the number of remaining identification numbers that can be generated from the number of digits forming the identification numbers of the said first series;
• if the second quantity of identification numbers to be generated is superior to the said number of remaining identification numbers, determining the new minimal number of digits required for generating the said second quantity of identification numbers;
• determining at least one non-used identification number among the identification numbers that can be generated using the number of digits of the first quantity of identification numbers;
• generating a second series of unique identification numbers (IN), these identification numbers being formed from unused identification numbers among the identification numbers that can be generated by using the number of digits of the first quantity of identification numbers, these identification numbers of the second series of numbers having a length at least equal to the new minimal number of digits required for generating said identification numbers (IN) of this second series of numbers;
• choosing a unique secure number (SN) among the generated unique secure numbers; and
• printing said chosen unique number on said physical support.

7. Physical support according to claim 6, **characterized in that** said unique secure number is printed on said physical support

8. Set of physical supports for accessing to an entitlement and/or obtaining a credit, each physical support comprising a unique secure number (SN), having a predefined fixed length, this secure number being formed from at least one identification number (IN) and a control value (VC), **characterized in that** said unique secure number is generated by the following steps :
• determining a first quantity of secure numbers to be generated;
• determining the minimal number of digits required for generating said first quantity of secure numbers ;
• generating a first series of unique identification numbers (IN), these identification numbers having a length at least equal to the minimal number of digits required for generating the secure numbers (SN), these identification numbers being selected from all the possible numbers having the required length;
• associating a control value (VC) with each identification number (IN), this control value having a length such that the total length of the secure numbers will correspond to said predefined fixed length, said control value (VC) being calculated from the identification number, secret information and an arithmetic rule;
• prior to the use of all the available identification numbers of the first series of identification numbers, determining a second additional quantity of secure numbers to be generated;
• calculating the number of remaining identification numbers that can be generated from the number of digits forming the identification numbers of the said first series;
• if the second quantity of identification numbers to be generated is superior to the said number of remaining identification numbers, determining the new minimal number of digits required for generating the said second quantity of identification numbers;
• determining at least one non-used identification number among the identification numbers that can be generated using the number of digits of the first quantity of identification numbers;
• generating a second series of unique identification numbers (IN), these identification numbers being formed from unused identification numbers among the identification numbers that can be generated by using the number of digits of the first quantity of identification numbers, these identification numbers of the second series of numbers having a length at least equal to the new minimal number of digits required for generating said identification numbers (IN) of this second series of numbers;
• choosing a unique secure number (SN) among the plurality of generated unique secure numbers, said quantity being at least equal to the number of physical supports forming the set of physical supports;
• printing on each of said physical supports forming said set of physical supports, a different unique secure number (SN) chosen among said generated unique secure numbers (SN).
